(19) Europäisches Patentamt
European Patent Office
Office européen des brevets

(11) EP 2 794 729 B1

(12) **EUROPEAN PATENT SPECIFICATION**

(45) Date of publication and mention of the grant of the patent:
**13.04.2016 Bulletin 2016/15**

(21) Application number: **12808378.9**

(22) Date of filing: **20.12.2012**

(51) Int Cl.:
***C08G 83/00*** *(2006.01)* ***C08G 69/44*** *(2006.01)*
***C02F 1/56*** *(2006.01)*

(86) International application number:
**PCT/EP2012/076284**

(87) International publication number:
**WO 2013/092800 (27.06.2013 Gazette 2013/26)**

(54) **HYPERBRANCHED POLYMERS**

HYPERVERZWEIGTE POLYMERE

POLYMÈRES HYPER-RAMIFIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2011 EP 11194575**

(43) Date of publication of application:
**29.10.2014 Bulletin 2014/44**

(73) Proprietor: **DSM IP Assets B.V.**
**6411 TE Heerlen (NL)**

(72) Inventors:
- **ARTS, Henricus, Johannes**
  **NL-6100 AA Echt (NL)**
- **DERKS, Franciscus, Johannes, Marie**
  **NL-6100 AA Echt (NL)**
- **HYETT, Wendy**
  **NL-6100 AA Echt (NL)**
- **WITTERS, Stijn**
  **NL-6100 AA Echt (NL)**

(74) Representative: **Nahon, Denise Francisca et al**
**DSM Intellectual Property**
**Urmond Office**
**P.O. Box 4**
**6100 AA Echt (NL)**

(56) References cited:
**CN-A- 102 030 399 US-B1- 6 784 267**

- **MALCOLM A. KELLAND: "Tuning the thermoresponsive properties of hyperbranched poly(ester amide)s based on diisopropanolamine and cyclic dicarboxylic anhydrides", JOURNAL OF APPLIED POLYMER SCIENCE, vol. 121, no. 4, 15 August 2011 (2011-08-15), pages 2282-2290, XP055020199, ISSN: 0021-8995, DOI: 10.1002/app.33942 cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 794 729 B1

## Description

The present invention relates to the field of hyperbranched polyester amides with improved properties preferably suitable for use in one or more of certain end uses and/or applications as described herein.

In many types of industrial and/or domestic processes or applications polymeric materials are used that must remain in solution at elevated temperatures and/or in the presence of salts. Examples of such materials include flocculants used in paper production and dishwater detergents.

Water soluble polymers typically used in these applications are block copolymers of polyethylene glycol and polypropylene glycol, polyethoxylated alkylphenols, ethoxylated alkylphenol-formaldehyde resins, polyvinylalcohol derivatives and cationic or anionic polyelectrolytes.

However these water soluble polymers have certain disadvantages. They can be non-biodegradable, which hinders their use in certain areas such as wastewater treatment. A disadvantage of some phenolic polymers is their suspected interference with the human endocrine system. Other water soluble polymers are toxic against water organisms. Therefore there is a need for water soluble polymers that remain soluble at high temperature and/or high salt concentrations and don't have some or all of the disadvantages described herein.

Hyperbranched polyester amides are available commercially from DSM under the registered trade mark Hybrane® in a variety of different types that comprise different functional groups. Whilst many generic types of such hyperbranched polymers exist, they are not all suitable for all applications. It would be desirable to find hyperbranched polymers which are particularly suitable for some or all of the applications described herein.

Currently used hyperbranched polymers have a low cloud point and when experiencing high temperatures it has been found that such materials when added to liquid media (such as in aqueous dispersions) can show phase separation above their cloud point, resulting in sticky deposits and lower concentrations which are thus less effective in their end use even if they can be re-dissolved completely on cooling. Therefore it would be desirable to provide hyperbranched polymers with higher cloud points than those presently available. It has also surprisingly been found that the presence of certain salts in the mixture also has a large influence in lowering the cloud point with sulphate and carbonate ions having a significant influence.

Malcolm A. Kelland (J. App. Poly. Sci. 15 Aug 2011 pp 2282-2290) reports preparing a certain hyperbranched polyester amides from diisopropanol amine and cyclic dicarboxylic anhydrides to study their lower critical solution temperatures (LCST) in water (measured as an optical cloud point). Kelland concludes that '*polyester amides with low LCST are of interest for biological and medical applications whereas polyester amides with a high LCST values may be useful ... for high salinity produced fluids* ....'

Despite this general statement the Kelland paper does not provide many details about which specific cloud point values may be useful in practise for which end uses of polyester amides and describes synthesis of only a few types of polyester amides which are then tested for only a limited number of end uses. So the conclusions in Kelland can be considered tentative and too vague to be of much practical assistance in developing or optimising polyester amide products for new and existing end uses. Kelland does not describe or prepare any polyester amide that contains betaine (or similar) functional groups such as those described herein.

US 6,784,267 B1 discloses the use of hyperbranched polyester amide polymers as flocculants in order to remove solids from municipal or industrial sludge. The patent discloses a hyperbranched polyesteramide wherein the branches are terminated by tertiary amine end groups quaternized with allyl benzyl chloride, allyl chloride, allyl glycidyl ether or glycidyl methacrylate.

Patent CN 102 030 399 A discloses the use of an hyperbranched polymer flocculant for water treatment and accordingly a method for flocculating a material dispersed in water; the polymer is a hydroxyl-terminated hyperbranched polymer.

It is a preferred object of the invention to solve some or all of the problems identified herein and to provide improved polyester amides optimised for different uses as well as improved methods of preparing them.

Surprisingly the applicant has discovered that certain hyperbranched polyester amides having a cloud point value above a minimum value (as tested under the conditions defined herein) are especially useful in one or more of the end uses described herein (also referred to herein collectively as END USES), for example use as a flocculant.

Therefore broadly in accordance with the present invention there is provided a hyperbranched polyester amide having a cloud point of at least one of the values described herein (such as at least 50°C) where the polyester amide comprises at least one neutral end group comprising a positively charged cationic moiety preferably an onium ion (more preferably a quaternary ammonium or phosphonium cation) which bears no hydrogen atom covalently attached to a negatively charged moiety such as a carboxylate group which may not be adjacent to the cationic site. Preferred neutral end groups comprise quaternary ammonium zwitterionic end groups, i.e. comprising zwitterions that have an anionic group (preferably carboxylate) attached to a positively charged nitrogen atom. More preferred neutral end groups (also denoted herein by the abbreviation BQ or 'betaine-type' groups) are represented by the Formula 1:

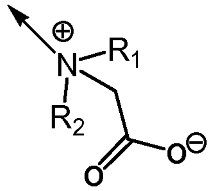

Formula 1

where $R_1$ and $R_2$ independently denote optionally substituted $C_1$-$_6$hydrocarbo groups, preferably $C_1$-$_4$hydrocarbyl groups, more preferably are both methyl (in which case Formula 1 represents a monovalent diimethylglycinyl group, also referred to herein as a 'betaine' group derived from N,N,N-trimethylglycine or glycine betaine).

Usefully the hyperbranched polyester amides of the invention (especially if they also contain cationic groups) may also comprise one or more anionic carboxylate counter ion(s) obtained and/or obtainable from at least one organic (mono or poly) carboxylic acid (including acidic and/or hydrogen salts thereof).

Preferred counter anions may be derived from organic carboxylic acids comprising:

> $C_{6-22}$ linear carboxylic acids and acid salts thereof, more preferably $C_{6-20}$ mono-unsaturated, di unsaturated or saturated acids and acid salts thereof; even more preferably $C_{6-18}$ mono unsaturated or saturated acids and acid salts thereof; most preferably selected from: citric acid [$HOC(CH_2COOH)_2COOH$] acid salts of citric acid (such as choline dihydrogen citrate [2-(Hydroxyethyl)trimethylammonium citrate,]) gluconic acid [$HOCH_2(CHOH)_4COOH$], oleic acid [n-octadecan-9-enoic acid] and/or linoleic acid [n-octadecan-9,12-dienoic acid]; for example citric acid and acid salts thereof, citric acid being especially preferred.

Hyperbranched polyester amides of the present invention may be obtained and/or obtainable from an acid and/or aqueous acid mixture comprising at least 10%, preferably at least 15%, more preferably at least 20% by weight of any organic carboxylic acid(s) and/or mixtures thereof (e.g. any as described above) which may provide some or all of the counter anions to the cationic functional groups thereon.

As used herein (unless the context clearly indicates otherwise) the term organic carboxylic acid encompasses organic acids having one or a plurality of carboxy groups (COOH thereon) and all acid salts obtainable by partial neutralization of polyprotic carboxylic acids.

In accordance with another aspect of the present invention there is provided use as a flocculant of a hyperbranched polyester amide as described herein having a cloud point of at least one of the values described herein (such as at least 50°C).

In accordance with yet another aspect of the present invention there is provided a method of flocculating a material dispersed in an aqueous medium comprising the steps of: providing an material dispersed in an aqueous medium and adding thereto a sufficient amounts of one or more of the hyperbranched polyester amide(s) as described herein having a cloud point of at least one of the values described herein (such as at least 50°C) to cause the material dispersed in said medium to flocculate.

Hyperbranched polyester amides of the present invention have a cloud point of at least 50°C, conveniently at least 55°C, preferably at least 60°C, more preferably at least 80°C, most preferably at least 90°C, in particular at least 100°C as measured in one or more of the tests described herein in demineralised water (DMW) and/or in salt solution (such as that described herein as BRINE). Conveniently polyester amides of the present invention have a cloud value of at least one of the previously described values in at least one of DMW and BRINE, more conveniently in BRINE, most conveniently in both DMW and BRINE.

Where the polyester amides of the invention are hyper-branched polymers they may be prepared by the methods described in one or more of the publications below (and combinations thereof) and/or have structures as described thereto. The contents of these documents are incorporated by reference. It will be appreciated that the core structure of the polyester amide can be formed as described in any of the known ways described on the documents below that are otherwise consisted with the invention herein. The present invention relates to novel and improved polyester amides due to the nature of the end groups thereon and the core structure is less critical to the advantageous properties described herein.

In one embodiment of the invention the hyperbranched polyester amides may comprise, as a core structure, a moiety obtained or obtainable from polycondensation reaction between a one or more dialkanol amines and one or more cyclic anhydrides. Optionally further end groups may be attached to the core structure as described herein.

The cyclic anhydride used to prepare the hyperbranched polyester amides of the invention may comprise at least one of: succinic anhydride, $C_1$-$C_{18}$ alkylsuccinic anhydrides, $C_1$-$C_{18}$ alkenylsuccinic anhydrides, polyisobutenylsuccinic anhydride, phthalic anhydride, cyclohexyl-1,2-dicarboxylic anhydride, cyclohexen-3,4-yl-1,2-dicarboxylic anhydride and/or a mixture of two or more thereof.

Another aspect of the present invention provides a composition comprising a hyperbranched polyester amide of the invention as described herein together with a diluent, conveniently water. Preferably the polyester amide is present in the composition in an amount of from 0.1% to 50%, more preferably 0.1 % to 10%, and most preferably 0.1 % to 5% by weight percentage of the total composition.

Hyperbranched polymers are polymers, which contain a large number of branching sites. Compared to conventional linear polymers which only contain two end groups, hyperbranched polymers possess a large number of end groups, for example on average at least five end groups, preferably on average at least eight end groups per macromolecule. Hyperbranched polyester amides can be produced by polycondensation of dialkanol amines and cyclic anhydrides with optional modification of the end groups, as described in EP1036106, EP1306401, WO 00/58388, WO 00/56804 and/or WO07/098888.

The chemistry of the polyester amides allows the introduction of a variety of functionalities, which can be useful to give the polyester amides other additional properties. Preferred functional end groups comprise (for example are)-OH,-COOH,-$NR_1R_2$, where $R_1$ and $R_2$ can be the same or different $C_{1-22}$alkyl,-OOC-R or-COOR, where R is an alkyl or aralkyl group. Other possible end groups are derived from polymers, silicones or fluoropolymers. Still other end groups are derived from cyclic compounds, e.g. piperidine and/or derivatives thereof. Hyperbranched polyester amides with these functionalities may be produced by any suitable method. For example carboxy functional hyperbranched polyester amide polymers are described in WO 2000-056804. Dialkyl amide functional hyperbranched polyester amide polymers are described in WO 2000-058388. Ethoxy functional hyperbranched polyester amide polymers are described in WO 2003-037959. Hetero functionalised hyperbranched polyester amides are described in WO 2007-090009. Secondary amide hyperbranched polyester amides are described in WO 2007-144189. It is possible, and often even desirable, to combine a number of different end group functionalities in a single hyperbranched polyester amide molecule in order to obtain desirable properties of the polymer.

The properties of a hyperbranched polyester amide may be modified by selecting the cyclic anhydride used to build up the polymer structure. Preferred cyclic anhydrides are succinic anhydride, alkylsuccinic anhydrides (where the length of the alkyl chain can vary from $C_1$ to $C_{18}$), alkenylsuccinic anhydrides (where the length of the alkenyl chain can vary from $C_1$ to $C_{18}$), polyisobutenylsuccinic anhydride, phthalic anhydride, cyclohexyl-1,2-dicarboxylic anhydride, cyclohexen-3,4-yl-1,2-dicarboxylic anhydride and other cyclic anhydrides. Especially preferred are succinic anhydride and cyclohexyl-1,2-dicarboxylic anhydride. It is possible to combine more than one type of anhydride to produce a hyperbranched polyester amide with the desired additional properties.

Additionally the anhydride can be partly replaced by the corresponding dicarboxylic acid to obtain the same product as e.g. succinic anhydride can be partly replaced by succinic acid.

In one embodiment the polyester amides of the invention may be obtained by both a cyclic anhydride and a diacid used together in the same process. Preferably the diacid is derived from the cyclic anhydride. A preferred weight percentage for the amount of anhydride is from 1 to 99%, more preferably from 10 to 90%, most preferably from 20 to 80% with respect to the total weight of anhydride and diacid. A preferred weight percentage of diacid is from 1 to 99%, more preferably from 10 to 90%, most preferably from 20 to 80% with respect to the total weight of anhydride and diacid.

The structure and properties of the polyester amides can be varied over a broad range of polarities and interfacial properties. This makes the hyperbranched polyester amides applicable to solve a variety of problems where water soluble polymers are required at high temperature and/or brine.

A further aspect of the invention broadly provides a use of a polyester amide (preferably hyperbranched polyester amide) in any of the applications described herein (END USES) such as use as a flocculant for example to make paper.

Preferred end uses and/or applications where the polyester amides of the invention may be advantageous are one or more of the following: uses that require polyester amides to remain in solution at elevated temperatures and/or in the presence of salts, as for example applications in the presence of calcium carbonate formation; in geothermal wells for geothermal energy production, cooling towers, cooling water in industrial plants and/or heat exchangers; as flocculants, rheology modifiers and/or dispersants for solid particles in for example paper production, as detergents in for example dishwashers where higher temperature and salts are usually present; material engineering applications; chemical engineering, separation processes (such as extractive distillation, solvent extraction, absorption, membranes and/or chromatography), additives (such as for coatings and/or resins), biotechnical reactor- based processes, formation of functional and/or protective coatings, formation of coatings having low viscosity and/or rapid drying, formation of thin films and/or sensors, formation of nano-sized materials, decontamination and anti-fouling of surfaces, formation of bio-mimetic materials, and/or any suitable combinations of the aforegoing (collectively referred to herein as END USES). The polyester amides of the invention may also be useful in biological and/or medical applications (such as gene and/or drug delivery, biomaterials and/or biointeraction).

Hyperbranched polyester amides that may be used in the present invention are water soluble and may be optionally soluble in most organic solvents. A further yet still other aspect of the invention broadly provides for use of polyester amide (preferably hyperbranched polyester amide) as described herein in any of the methods of the invention described herein.

The process of the present invention may use hyperbranched polyester amides alone or in combinations or formulations with other active ingredients as necessitated by specific applications. Examples of other compounds with specific activity are corrosion inhibitors, antifoaming agents, biocides, detergents, rheology modifiers and other functions as made necessary by the application. Application of the hyperbranched polyester amide in the process according to the invention may be as solid or liquid, or dissolved in a solvent which can be chosen by those skilled in the art.

Preferably the polyester amides and/or used in the present invention are substantially non-linear, non-cyclic branched macromolecules (such as polymers) having three or more polymeric centres, more preferably having a molecular weight of at least 100. Usefully the polyester amides are three dimensional hyperbranched polymers, star-shaped polymers or dendrimeric macro-molecules.

Suitable apolar groups (end groups) may be optionally substituted hydrocarbo groups comprising at least 4 carbon atoms.

Preferred polyester amides of and/or used in the present invention comprise those in which the (average) ratio of polar groups to apolar groups is from about 1.1 to about 20, more preferably from 1.2 to 10, most preferably from 1.5 to 8.0. These ratios may be weight ratios and/or molar ratios, preferably are weight ratios.

Hyperbranched polyester amides of and/or used in the present invention may obtained and/or obtainable from: at least one organo building block and at least one tri (or higher) organo valent branching unit, where the at least one building block is capable of reacting with the at least one branching unit; and at least one or the building block and/or the branching unit (conveniently the branching unit) comprises an end group comprising a polar moiety.

More preferred hyperbranched polyester amides of and/or used in the present invention may be obtained and/or obtainable from: at least one building block comprising one or more polycarboxylic acid(s) and/or one or more anhydride(s) obtained and/or obtainable from one or more polycarboxylic acid(s); and at least one branching unit comprising at least one tri functional nitrogen atom where the at least one branching unit containing an end group comprising a polar moiety

Suitable polycarboxylic acid(s) that may be used as and/or to prepare the building block(s) may conveniently be dicarboxylic acids such as $C_{2-12}$hydrocarbo dicarboxylic acids; more conveniently linear di-acids and/or cyclic di-acids; and most conveniently linear di-acids with terminal carboxylic acid groups such as those selected from the group consisting of: saturated di-acids such as:2-ethanedioic acid (oxalic acid); 3-propanedioic acid (malonic acid); 4-butanedioic acid (succinic acid), 5-pentanedioic acid (glutaric acid); 6-hexanedioic acid (adipic acid);-heptanedioic acid (pimelic acid); 8-octanedioic acid (suberic acid); combinations thereof; and mixtures thereof; and unsaturated di-acids such as: Z-(cis)-butenedioic acid (maleic acid); E-(trans)-butenedioic acid (fumaric acid); 2,3-dihydroxybutandioic acid (tartaric acid); combinations thereof; and/or mixtures thereof.

Useful hyperbranched polyester amides of and/or used in the present invention may be obtained and/or obtainable from at least one building block that comprises: optionally substituted $C_{2-30}$hydrocarbo dioic acids and/or anhydrides thereof, combinations thereof on the same moiety; and/or mixtures thereof on different moieties;

More useful hyperbranched polyester amides of use in the present invention may obtained and/or obtainable from at least one building block that comprises: $C_{4-16}$alkenyl $C_{2-10}$dioic anhydrides; $C_{4-16}$cycloalkyl dicarboxylic acid anhydrides; $C_{2-10}$alkandioic anhydrides; phthalic anhydrides, combinations thereof on the same moiety and/or mixtures thereof on different moieties.

Most useful hyperbranched polyester amides of use in the present invention may obtained and/or obtainable from at least one building block that comprises: dodecenyl (i.e. $C_{12}$alkenyl) succinic (i.e. 4-butanedioic) anhydride; cyclohexane-1,2-dicarboxylic acid anhydride; succinic (i.e. 4-butanedioic) anhydride; combinations thereof on the same moiety; and/or mixtures thereof on different moieties.

Suitable branching units that may be used to prepare hyperbranched polyester amides of and/or used in the present invention may be any moiety capable of reacting with the building block and/or precursor therefor (such as any of those described herein) at three or more sites on the branching unit to form a three dimensional (branched) product. Branching units denote those units which form the core structure of the hyperbranched polyester amides and do not necessarily form end groups.

Branching units may comprise one or more polyoxyalkylene moiet(ies) comprises polyoxyalkylene repeat unit(s) for example suitable unsubstituted or substituted alkylene groups such as ethylene, propylene, butylene, and isobutylene. The polyoxyalkylene moiety comprising one or more of these repeat units can be a homo, block or random polymer, or any suitable mixtures thereof. Preferred the average total number of repeat units in polyoxyalkylene moiet(ies) suitable for use in branching units herein is from 2 to 100, more preferably 5 to 60, most preferably 10 to 50, for example 16 or 45.

Suitable neutral end groups may be selected from those described herein, such as
quaternary ammonium zwitterionic end groups, i.e. comprising zwitterions that have an anionic group (preferably carboxylate) attached to a positively charged nitrogen atom, more preferably end groups of Formula 1 (also denoted herein as BQ),

Useful functional hyperbranched polyester amides of and/or used in the present invention may be obtained and/or obtainable from:

at least one building block selected from the group consisting of:

optionally substituted $C_{2-30}$hydrocarbo dioic acid,
anhydrides thereof;
combinations thereof on the same moiety; and
mixtures thereof on different moieties;

More useful hyperbranched polyester amides of use in the present invention may obtained and/or obtainable from:

at least one building block selected from the group consisting of:

$C_{4-16}$alkenyl $C_{2-10}$dioic anhydride;
$C_{4-16}$cycloalkyl dicarboxylic acid anhydride;
$C_{2-10}$alkandioic anhydride;
combinations thereof on the same moiety; and
mixtures thereof on different moieties.

The at least one building blocks as described herein may comprises at least one end group selected from the group consisting of:

quaternised carboxylate $C_1$-$_{12}$hydrocarbo (e.g. $C_{1-6}$hydrocarbylcarboxylate) substituted amino
optionally neutralised carboxylic acid groups;
optionally substituted nitrogen containing $C_{3-10}$ rings (such as morpholo);
combinations thereof on the same moiety; and
mixtures thereof on different moieties.

Most useful functional hyperbranched polyester amides of use in the present invention may obtained and/or obtainable from:

at least one building block selected from the group consisting of:

dodecenyl (i.e. $C_{12}$alkenyl) succinic (i.e. 4-butanedioic) anhydride;
cyclohexane-1,2-dicarboxylic acid anhydride;
succinic (i.e. 4-butanedioic) anhydride;
combinations thereof on the same moiety; and
mixtures thereof on different moieties;

at least one branching unit selected from the group consisting of:

diisopropanol amine; diethanol amine;
trishydroxymethylene amino methane;
combinations thereof on the same moiety; and
mixtures thereof on different moieties;

where the at least one end group selected from the group consisting of:

quaternised $C_{1-6}$alkylcarboxylate substituted amino
carboxylic acid groups optionally neutralized with ammonia;
morpholine;
combinations thereof on the same moiety; and
mixtures thereof on different moieties.

Advantageously hyperbranched polyester amides of and/or used in the present invention may have a (theoretical) number average molecular weight ($M_n$) of from about 500 to about 50000 g/mol; more advantageously from about 800 to about 30000 g/mol; most advantageously from about 1000 to about 20000 g/mol; even more particularly from about 1200 to about 17000 g/mol.

The end group (or reagents and/or precursors therefore) may be introduced at any stage in the preparation of

the polyester amide, though typically is introduced at the beginning. The end group may be attached at any point to the molecule.

Specific examples of typical idealized structure of particular preferred hyperbranched polyester amide of and/or used in the present invention are given below.

It will be appreciated that species listed herein as examples of end groups, branching units and/or building blocks include all suitable derivatives and/or precursors thereof as the context dictates. For example if a moiety forms a part of the polyester amide (i.e. is attached to other moieties in macromolecule) reference to compounds also includes their corresponding radical moieties (e.g. monovalent or divalent radicals) that are attached to other moieties forming the polyester amide of the invention.

The terms 'optional substituent' and/or 'optionally substituted' as used herein (unless followed by a list of other substituents) signifies the one or more of following groups (or substitution by these groups): carboxy, sulfo, sulfonyl, phosphates, phosphonates, phosphines, formyl, hydroxy, amino, imino, nitrilo, mercapto, cyano, nitro, methyl, methoxy and/or combinations thereof. These optional groups include all chemically possible combinations in the same moiety of a plurality (preferably two) of the aforementioned groups (e.g. amino and sulfonyl if directly attached to each other represent a sulfamoyl group). Preferred optional substituents comprise: carboxy, sulfo, hydroxy, amino, mercapto, cyano, methyl, halo, trihalomethyl and/or methoxy, more preferred being methyl and/or cyano.

The synonymous terms 'organic substituent' and "organic group" as used herein (also abbreviated herein to "organo") denote any univalent or multivalent moiety (optionally attached to one or more other moieties) which comprises one or more carbon atoms and optionally one or more other heteroatoms. Organic groups may comprise organoheteryl groups (also known as organoelement groups) which comprise univalent groups containing carbon, which are thus organic, but which have their free valence at an atom other than carbon (for example organothio groups). Organic groups may alternatively or additionally comprise organyl groups which comprise any organic substituent group, regardless of functional type, having one free valence at a carbon atom. Organic groups may also comprise heterocyclyl groups which comprise univalent groups formed by removing a hydrogen atom from any ring atom of a heterocyclic compound: (a cyclic compound having as ring members atoms of at least two different elements, in this case one being carbon). Preferably the non-carbon atoms in an organic group may be selected from: hydrogen, halo, phosphorus, nitrogen, oxygen, silicon and/or sulphur, more preferably from hydrogen, nitrogen, oxygen, phosphorus and/or sulphur.

Most preferred organic groups comprise one or more of the following carbon containing moieties: alkyl, alkoxy, alkanoyl, carboxy, carbonyl, formyl and/or combinations thereof; optionally in combination with one or more of the following heteroatom containing moieties: oxy, thio, sulfinyl, sulfonyl, amino, imino, nitrilo and/or combinations thereof. Organic groups include all chemically possible combinations in the same moiety of a plurality (preferably two) of the aforementioned carbon containing and/or heteroatom moieties (e.g. alkoxy and carbonyl if directly attached to each other represent an alkoxycarbonyl group).

The term 'hydrocarbo group' as used herein is a sub set of an organic group and denotes any univalent or multivalent moiety (optionally attached to one or more other moieties) which consists of one or more hydrogen atoms and one or more carbon atoms and may comprise one or more saturated, unsaturated and/or aromatic moieties. Hydrocarbo groups may comprise one or more of the following groups. Hydrocarbyl groups comprise univalent groups formed by removing a hydrogen atom from a hydrocarbon (for example alkyl). Hydrocarbylene groups comprise divalent groups formed by removing two hydrogen atoms from a hydrocarbon, the free valencies of which are not engaged in a double bond (for example alkylene). Hydrocarbylidene groups comprise divalent groups (which may be represented by "$R_2C=$") formed by removing two hydrogen atoms from the same carbon atom of a hydrocarbon, the free valencies of which are engaged in a double bond (for example alkylidene). Hydrocarbylidyne groups comprise trivalent groups (which may be represented by "RC="), formed by removing three hydrogen atoms from the same carbon atom of a hydrocarbon the free valencies of which are engaged in a triple bond (for example alkylidyne). Hydrocarbo groups may also comprise saturated carbon to carbon single bonds (e.g. in alkyl groups); unsaturated double and/or triple carbon to carbon bonds (e.g. in respectively alkenyl and alkynyl groups); aromatic groups (e.g. in aryl groups) and/or combinations thereof within the same moiety and where indicated may be substituted with other functional groups

The term 'alkyl' or its equivalent (e.g. 'alk') as used herein may be readily replaced, where appropriate and unless the context clearly indicates otherwise, by terms encompassing any other hydrocarbo group such as those described herein (e.g. comprising double bonds, triple bonds, aromatic moieties (such as respectively alkenyl, alkynyl and/or aryl) and/or combinations thereof (e.g. aralkyl) as well as any multivalent hydrocarbo species linking two or more moieties (such as bivalent hydrocarbylene radicals e.g. alkylene).

Any radical group or moiety mentioned herein (e.g. as a substituent) may be a multivalent or a monovalent radical unless otherwise stated or the context clearly indicates otherwise (e.g. a bivalent hydrocarbylene moiety linking two other moieties). However where indicated herein such monovalent or multivalent groups may still also comprise optional substituents. A group which comprises a chain of three or more atoms signifies a group in which the chain wholly or in part may be linear, branched and/or form a ring (including spiro and/or fused rings). The total number of certain atoms is specified for certain substituents for example $C_{1-N}$organo, signifies an organo moiety comprising from

1 to N carbon atoms. In any of the formulae herein if one or more substituents are not indicated as attached to any particular atom in a moiety (e.g. on a particular position along a chain and/or ring) the substituent may replace any H and/or may be located at any available position on the moiety which is chemically suitable and/or effective.

Preferably any of the organo groups listed herein comprise from 1 to 36 carbon atoms, more preferably from 1 to 18. It is particularly preferred that the number of carbon atoms in an organo group is from to 12, especially from 1 to 10 inclusive, for example from 1 to 4 carbon atoms.

As used herein chemical terms (other than IUAPC names for specifically identified compounds) which comprise features which are given in parentheses - such as (alkyl)acrylate, (meth)acrylate and/or (co)polymer denote that that part in parentheses is optional as the context dictates, so for example the term (meth)acrylate denotes both methacrylate and acrylate.

Certain moieties, species, groups, repeat units, compounds, oligomers, polymers, materials, mixtures, compositions and/or formulations which comprise and/or are used in some or all of the invention as described herein may exist as one or more different forms such as any of those in the following non exhaustive list: stereoisomers (such as enantiomers (e.g. E and/or Z forms), diastereoisomers and/or geometric isomers); tautomers (e.g. keto and/or enol forms), conformers, salts, zwitterions, complexes (such as chelates, clathrates, crown compounds, cyptands / cryptades, inclusion compounds, intercalation compounds, interstitial compounds, ligand complexes, organometallic complexes, non-stoichiometric complexes, $\Pi$ adducts, solvates and/or hydrates); isotopically substituted forms, polymeric configurations [such as homo or copolymers, random, graft and/or block polymers, linear and/or branched polymers (e.g. star and/or side branched), cross linked and/or networked polymers, polymers obtainable from di and/or tri valent repeat units, mono-disperse dendrimers (unless the context herein clearly indicates otherwise), polymers of different tacticity (e.g. isotactic, syndiotactic or atactic polymers)]; polymorphs (such as interstitial forms, crystalline forms and/or amorphous forms), different phases, solid solutions; and/or combinations thereof and/or mixtures thereof where possible. The present invention comprises and/or uses all such forms which are effective as defined herein.

Polyester amides may also usefully exhibit other properties to be useful in one or more of the end uses and/or applications described herein. For example the polyester amides may exhibit at least one of those desired properties described herein and/or any combinations thereof that are not mutually exclusive.

Useful polyester amide(s) may exhibit one or more improved propert(ies) (such as those described herein) with respect to known polyester amides. More usefully such improved properties may be in a plurality, most usefully three or more of those properties below that are not mutually exclusive.

Conveniently the polyester amide(s) may exhibit one or more comparable propert(ies) (such as those described herein) with respect to known polyester amides. More usefully such comparable properties may be in two or more, most usefully three or more, for example all of those properties below that are not improved and/or mutually exclusive.

Improved propert(ies) as used herein denotes that the value of one or more parameter(s) of the polyester amides of the present invention is > +8 % of the value of that parameter for the reference described herein, more preferably > +10 %, even more preferably > +12 %, most preferably > +15 %.

Comparable properties as used herein means the value of one or more parameter(s) of the polyester amides of the present invention is within +/-6 % of the value of that parameter for the reference described herein, more preferably +/- 5 %, most preferably +/- 4 %.

The known reference polyester amide for these comparisons is comparative example COMP 1' (prepared as described herein) used in the same amounts (and where appropriate in the same compositions and tested under the same conditions) as polyester amides of the invention being compared.

The percentage differences for improved and comparable properties herein refer to fractional differences between the polyester amide of the invention and the comparative example COMP 1' (prepared as described herein) where the property is measured in the same units in the same way (i.e. if the value to be compared is also measured as a percentage it does not denote an absolute difference).

It is preferred that polyester amides of the invention (more preferably hyperbranched polyester amides) have improved have improved utility in one or more of the END USES described herein (measured by any suitable parameter known to those skilled in the art) compared to the comparative example COMP 1' (prepared as described herein).

Many other variations embodiments of the invention will be apparent to those skilled in the art and such variations are contemplated within the broad scope of the present invention.

Further aspects of the invention and preferred features thereof are given in the claims herein.

Test methods

Method to determine cloud point

For determining the cloud point of the polyester amides the following procedure was followed.

In a 50ml glass vial was weighted 140mg of the polymer to which was added water or a brine solution to a total

weight of 20g In the case of amine containing polyester amides the pH was adjusted with 5% w/w HCI solution to obtain the desired pH. A Teflon coated stirrer bar was added to the vial and a thermocouple was immersed in the solution for at least 1 cm, approximately in the middle of the vial. The vial was placed on a stirrer/heater and the temperature was gradually increased while stirring. The solution was observed visually while warming and the cloud point was indicated by the first sign of cloudiness of the solution.

Composition salt solution (also referred to herein as BRINE)

For the determination of the cloud point in brine solutions the following salt composition was made.

| | |
|---|---|
| 140 g | Sodium chloride |
| 30 g | Calcium chloride.6$H_2O$ |
| 8 g | Magnesium chloride.6$H_2O$ |

The salts were dissolved in 1 litre of demineralised water. The pH of the solution was adjusted to 4 (or another desired pH as specified) with 0.1 M hydrochloric acid solution.

Examples

The present invention will now be described in detail with reference to the following non limiting examples which are by way of illustration only. The examples comprise hyperbranched polyester amides with neutral functional groups represented by Formula 1. Such hyperbranched polyester amides are also referred to herein as BQ or betaine-type functional Hyperbranched polyester amides and include combinations with other functional end groups.

Examples 1 to 4

Preparation of betaine-type functional polyester amides.

Example 1

Preparation 1A

A double walled glass reactor, which can be heated by means of thermal oil, fitted with a mechanical stirrer, a distillation head , a vacuum and nitrogen connection was heated to 70°C. The reactor is charged with 190.9g of N,N-bis(N'N'-dimethylaminopropyl) amine and 91.3 diisopropanol amine and 220.2g of hexahydrophthalic anhydride was added and then the reaction mixture was stirred for 2 hours. The temperature was increased to 160°C and the pressure was gradually reduced to a final pressure of <10 mbar to remove reaction water. Heating and vacuum were maintained until the residual carboxylic acid content was <0.3 meq/g (tritrimetrical analysis) to obtain a product used in the next step, the product being characterised as follows. AV=10.5mgKOH/g. Amine content=3.20meq/g (tritrimetrical analysis). Molecular weight Mn=1675

Preparation 1 B

The product obtained in preparation 1A (175 g) was dissolved in 175g of water. 36.2 sodium chloro acetate and 36.2g of water were added. The reaction mixture was stirred at 80°C until$^{1}$H-NMR analysis shows a complete conversion of the chloroacetate to obtain as product, Example 1.

Example 2

Preparation 2A

In a similar manner to that described in preparation 1A the reactor was charged with 245.0g of N,N-bis(N'N'-dimethylaminopropyl)amine and 174.2 diisopropanol amine. 380.8g of hexahydrophthalic anhydride was added. Heating and vacuum were maintained until the residual carboxylic acid content was <0.3 meq/g (tritrimetrical analysis) to obtain a product used in the next step and characterised as follows:

Acid value (AV) = 9.8mgKOH/g, amine content = 2.99 meq/g (tritrimetrical analysis), Molecular weight (Mn) = 5200

Preparation 2B

Example 2 was prepared in a similar manner to that described in preparation 1 B but using the reaction product of example 2A to obtain as product Example 2.

Example 3

Preparation 3A

In a similar manner to that described in preparation 1A the reactor was charged with 237.5g of N,N-bis(N'N'-dimethylaminopropyl)amine and 112.6 diisopropanol amine. 426.8g of dodecenylsuccinic anhydride was added. Heating and vacuum were maintained until the residual carboxylic acid content was <0.3 meq/g (tritrimetrical analysis) AV=9.8mgKOH/g. amine content=2.99meq/g (tritrimetrical analysis) Molecular weight Mn=2240

Preparation 3B

Example 3 was prepared in a similar manner to that described in preparation 1 B but using the reaction product of example 3A to obtain as product Example 3.

Example 4

Preparation 4A

In a similar manner to that described in preparation 1A the reactor was charged with 302.3g of N,N-bis(N'N'-dimethylaminopropyl)amine and 183.1g diisopropanol amine. 414.6g of hexahydrophthalic anhydride was added. Heating and vacuum were maintained until the residual carboxylic acid content was <0.3 meq/g (tritrimetrical analysis) to obtain a product used in the next step and characterised as follows:

Acid value (AV) = 10.4mgKOH/g, amine content = 3.4 meq/g (tritrimetrical analysis), Molecular weight (Mn) = 2850

Preparation 4B

Example 4 was prepared in a similar manner to that described in preparation 1 B but using the reaction product of example 4A.

359g of precursor 4A were dissolved in 359g of water. 126.8g of sodium chloroacetate and 126.8g of water were added. The reaction mixture was stirred at 80°C until $^{1}$H-NMR analysis shows a complete conversion of the chloroacetate to obtain as product, Example 4

Examples 5 to 15

Preparation of BQ functional hyperbranched polyester amides also having ammonium carboxylate end groups.

Preparation 5 (with 50% citric acid)

137.8 g if the product obtained in example 1A was dissolved in 137.8g of water. 15.3g of sodium chloroacetate and 15.3g of water were added to obtain a final sold concentration of 50wt%. The solution was heated to 50°C for 2.5 hours. After this period the temperature was gradually raised to 80'C and maintained at this temperature until 1 H-NMR analysis showed complete conversion of chloroacetate.

The reaction mixture was cooled to room temperature and 28.9g citric acid and 28.9g of water were added. The reaction mixture was stirred for 2 hours to obtain as product example 5.

Preparation 6 (with 40% citric acid)

135.3 g if the product obtained in example 1A was dissolved in 135.3g of water. 18.1 g of sodium chloroacetate and 18.1 g of water were added to obtain a final sold concentration of 50wt%. The solution was heated to 50°C for 2.5 hours. After this period the temperature was gradually raised to 80'C and maintained at this temperature until 1 H-NMR analysis showed complete conversion of chloroacetate.

The reaction mixture was cooled to room temperature and 24.0g citric acid and 24.0g of water were added. The reaction mixture was stirred for 2 hours to obtain as product example 6.

Preparation 7 (with 30% citric acid)

141.8g if the product obtained in example 1A was dissolved in 141.8g of water. 20.9g of sodium chloroacetate and 20.9g of water were added to obtain a final sold concentration of 50wt%. The solution was heated to 50°C for 2.5 hours. After this period the temperature was gradually raised to 80'C and maintained at this temperature until 1 H-NMR analysis showed complete conversion of chloroacetate.

The reaction mixture was cooled to room temperature and 19.6g citric acid and 19.6g of water were added. The reaction mixture was stirred for 2 hours to obtain as product example 7.

Preparation 8 (with 20% citric acid)

140.3 g if the product obtained in example 1A was dissolved in 140.3 g of water. 25.0g of sodium chloroacetate and 25.0g of water were added to obtain a final sold concentration of 50wt%. The solution was heated to 50°C for 1.5 hours. After this period the temperature was gradually raised to 80'C and maintained at this temperature until 1 H-NMR analysis showed complete conversion of chloroacetate.

The reaction mixture was cooled to room temperature and 13.5g citric acid and 13.5g of water were added. The reaction mixture was stirred for 2 hours to obtain as product example 8.

Preparation 9 (with 10% citric acid)

63.4 g if the product obtained in example 1A was dissolved in 63.4 g of water. 25.3g of sodium chloroacetate and 25.3g of water were added to obtain a final sold concentration of 50wt%. The solution was heated to 50°C for 1 hours. After this period the temperature was gradually raised to 80°C and maintained at this temperature until 1 H-NMR analysis showed complete conversion of chloroacetate. The reaction mixture was cooled to room temperature and 13.5g citric acid and 13.5g of water were added. The reaction mixture was stirred for 2 hours to obtain as product example 9.

Preparation 10 (with citric acid)

64.6 g if the product obtained in example 2A was dissolved in 64.6 g of water. 15.8g of sodium chloroacetate and 15.8g of water were added to obtain a final sold concentration of 50wt%. The solution was heated to 50°C for 1 hour. After this period the temperature was gradually raised to 80°C and maintained at this temperature until 1 H-NMR analysis showed complete conversion of chloroacetate. The reaction mixture was cooled to room temperature. To 100g of the obtained product was added 7.0g citric acid and 7.0g of water. The reaction mixture was stirred for 2 hours to obtain as product example 10.

Preparation 11 (with choline dihydrogen citrate)

70.1 g if the product obtained in example 2A was dissolved in 70.1 g of water. 17.2g of sodium chloroacetate and 17.2g of water were added to obtain a final sold concentration of 50wt%. The solution was heated to 50°C for 3 hour. After this period the temperature was raised to 80°C and maintained at this temperature until 1 H-NMR analysis showed complete conversion of chloroacetate. The reaction mixture was cooled to room temperature. To 125g of the obtained solution was added 13.3g choline dihydrogen citrate and 13.3g of water. The reaction mixture was stirred for 2 hours to obtain as product example 11.

Preparation 12 (with gluconic acid)

250.3 g if the product obtained in example 2A was dissolved in 250.3g of water. 45.9g of sodium chloroacetate and 45.9g of water were added to obtain a final sold concentration of 50wt%. The solution was heated to 50°C for 6 hours. After this period the temperature was raised to 80°C and maintained at this temperature until 1 H-NMR analysis

showed complete conversion of chloroacetate. The reaction mixture was cooled to room temperature. To 180g of the obtained solution was added 56.8g of a 48wt% solution of gluconic acid. The reaction mixture was stirred for 2 hours to obtain as product example 12.

Preparation 13A (with mixture of 10% citric acid and 20% oleic acid)

95.7 g if the product obtained in example 2A was dissolved in 95.7g of water. 23.5g of sodium chloroacetate and 23.4g of water were added to obtain a final sold concentration of 50wt%. The solution was heated to 50°C for 4.5 hours. 1 H-NMR analysis showed complete conversion of chloroacetate. The reaction mixture was cooled to room temperature.

Preparation 13B

To 23.9g of the obtained solution in preparation 13A was added 0.7g of citric acid, 2.1 g oleic acid and 2.8g of water. The reaction mixture was stirred for 2 hours to obtain as product example 13.

Preparation 14 (with mixture of 10% citric acid and 20% linoleic acid)

To 19.4g of the obtained solution in preparation 13A was added 0.57g of citric acid, 1.66g linoleic acid and water. The reaction mixture was stirred for 2 hours to obtain as product example 14.

Preparation 15 (with 20% oleic acid)

52.8 g if the product obtained in example 2A was dissolved in 52.8g of water. 15.5g of sodium chloroacetate and 15.5g of water were added to obtain a final sold concentration of 50wt%. The solution was heated to 50°C for 3.5 hours. After this period the temperature was gradually raised to 80°C and maintained at this temperature until 1 H-NMR analysis showed complete conversion of chloroacetate. The reaction mixture was cooled to room temperature. To 120g of the obtained solution was added 8.2g of oleic acid and 8.2g of water. The reaction mixture was stirred for 2 hours to obtain as product example 15.

Examples 16 to 17

Preparation of BQ functional Hyperbranched polyester amides also having cyclic amide end groups

Example 16

Preparation 16A

A double walled glass reactor, which can be heated by means of thermal oil, fitted with a mechanical stirrer, a distillation head , a vacuum and nitrogen connection was heated to 55°C. The reactor is charged with 123.9g of N,N-bis(N'N'-dimethylaminopropyl) amine and 87.0g of morpholine. 254.3g of hexahydrophthalic anhydride was added and the temperature was raised to 120°C. After stirring for 1 hour 132.6g of diisopropanol amine and 99.6g of hexahydrophthalic anhydride were added. The temperature was further increased to 180°C and after approximately 1 hour the pressure was gradually reduced to a final pressure of <10 mbar to distil off reaction water. Heating and vacuum were maintained until the residual carboxylic acid content was <0.3 meq/g (tritrimetrical analysis) to obtain a product used in the next step, which was characterised as follows:

AV=19.3mgKOH/g. Amine content=1.80meq/g (tritrimetrical analysis).

Molecular weight Mn=1990.

Preparation 16B

The product obtained in preparation 16A (175 g) was used analogously to the product of Preparation 1 A above in the process described in Preparation 1 B above to obtain as a product Example 16.

Example 17

Preparation 17A

In a similar manner to that described in Example 4 Instead of morpholine, pyrrolidine was used to obtain, as a product, which was used in the next step and which was characterised as follows:

AV=24mgKOH/g. amine content= 1.91meq/g (tritrimetrical analysis)

Molecular weight Mn=1940

Preparation 17B

The product obtained in preparation 17A (175 g) was used analogously to the product of Preparation 1 A above in the process described in Preparation 1 B above to obtain as a product Example 17.

| Compound from example | Cloud point (°C) | |
|---|---|---|
| | DMW | BRINE |
| | pH=4 | pH=4 |
| 1 | >100 | >100 |
| 2 | >100 | >100 |
| 3 | >100 | >100 |
| 4 | >100 | >100 |
| 5 | >100 | >100 |
| 6 | >100 | >100 |
| 7 | >100 | >100 |
| 8 | >100 | >100 |
| 9 | >100 | >100 |
| 10 | >100 | >100 |
| 11 | >100 | >100 |
| 12 | >100 | >100 |
| 13 | >100 | >100 |
| 14 | >100 | >100 |
| 15 | >100 | >100 |
| 16 | >100 | >100 |
| 17 | >100 | 58 |
| Comp A | 84 | 14 |
| Comp B | Insoluble | Insoluble |
| Comp C | insoluble | insoluble |

Comparative examples:

Preparation of highly branched polyester amides containing hydroxy end groups.

Comparative A:

A double walled glass reactor, which can be heated by means of thermal oil, fitted with a mechanical stirrer, a

distillation head , a vacuum and nitrogen connection, is charged with 192.5 g of succinic anhydride. The reactor was heated to 125°C. When the succinic anhydride has melted 307.5g of diisopropanol amine was added. The reaction mixture was stirred for 1 hour and then the temperature was raised to 160°C. Over a period of 4 hours the pressure was gradually reduce to a final pressure of <10mbar to distil off reaction water. Heating and vacuum were maintained until the residual carboxylic acid content was < 0.2 meq/g (tritrimetrical analysis). Molecular weight Mn=1200.

$$AV=5.2 mgKOH/g$$

Comparative B

A double walled glass reactor, which can be heated by means of thermal oil, fitted with a mechanical stirrer, a distillation head , a vacuum and nitrogen connection, is charged with 245.5 g of hexahydrophthalic anhydride. The reactor was heated to 80°C. When the anhydride has melted 254.5g of diisopropanol amine was added. The reaction mixture was stirred for 1 hour and then the temperature was raised to 160°C. Over a period of 4 hours the pressure was gradually reduce to a final pressure of <10mbar to distil off reaction water. Heating and vacuum were maintained until the residual carboxylic acid content was < 0.2 meq/g (tritrimetrical analysis). Molecular weight Mn=1500.

$$AV=6.4 mgKOH/g$$

Comparative C

To 2.0g of a 50wt% solution of the compound from example 2A was added 0.82g of oleic acid. The solution became viscous and was mixed on a roller for 10 hours.

Several of the examples herein describe BQ functional hyperbranched polyester amides that are protonated with organic acids. In one embodiment of the present invention such a combination is preferred. This is shown by the comparative examples (e.g. Comp C) where an amine functional hyperbranched polyester amides protonated with oleic acid is less beneficial. Without wishing to be bound by any mechanism it is believed that protonation with organic acids (for example long chain aliphatic acids) in combination with betaine-type functional groups may lead to an advantageous increase in cloud point.

**Claims**

**1.** A hyperbranched polyester amide having a cloud point of at least 50°C in demineralised water or in salt solution also referred to as brine, where the polyester amide comprises at least one end group thereon selected from:

at least one neutral end group comprising a positively charged cationic moiety preferably an onium ion (more preferably a quaternary ammonium or phosphonium cation) which bears no hydrogen atom covalently attached to a negatively charged moiety such as a carboxylate group which may not be adjacent to the cationic site,

wherein the cloud point of the polyester amide is determined following the procedure of weighing in a 50ml glass vial 140mg of the polyester amide to which is added water or a brine solution to a total weight of 20g, and wherein in the case of amine containing polyester amides the pH is adjusted with 5% w/w HCl solution to obtain a pH of 4, a Teflon coated stirrer bar is added to the vial and a thermocouple is immersed in the solution for at least 1 cm,

approximately in the middle of the vial, the vial is placed on a stirrer/heater and the temperature is gradually increased while stirring, the solution is observed visually while warming and the cloud point is indicated by the first sign of cloudiness of the solution,

wherein for the determination of the cloud point in brine solutions a salt composition was used consisting of

140 g Sodium chloride
30 g Calcium chloride.6$H_2O$
8 g Magnesium chloride.6$H_2O$

dissolved in 1 litre of demineralised water, wherein the pH of the solution was adjusted to 4 with 0.1 M hydrochloric acid solution.

2. A hyperbranched polyester amide as claimed in claim 1, which has a cloud point of at least 75°C and where the at least one neutral end group thereon comprises: at least one zwitterion that has an anionic carboxylate attached to a positively charged nitrogen atom.

3. A hyperbranched polyester amide as claimed in any preceding claim, which has a cloud point of at least 80°C and where the at least one neutral end group comprises a group represented by Formula 1:

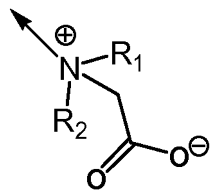

where $R_1$ and $R_2$ independently denote optionally substituted $C_{1-6}$hydrocarbo groups, preferably $C_{1-4}$hydrocarbyl groups, more preferably are both methyl (i.e. a 'betaine' group).

4. A hyperbranched polyester amide as claimed in the preceding claim, where in Formula 1 $R_1$ and $R_2$ independently denote $C_{1-4}$hydrocarbyl groups.

5. A hyperbranched polyester amide as claimed in the preceding claim, where in Formula 1 $R_1$ and $R_2$ independently denote methyl (i.e. Formula 1 is a 'betaine' group).

6. A hyperbranched polyester amide as claimed in any preceding claim, which comprises cationic functional groups thereon and one or more carboxylate counter anion(s) obtained and/or obtainable from at least one organic (mono or poly) carboxylic acid (including acidic and/or hydrogen salts thereof).

7. A hyperbranched polyester amide as claimed in the preceding claim which comprises one or more carboxylate counter ion(s) obtained and/or obtainable from citric acid and/or any suitable acid salt thereof.

8. A hyperbranched polyester amide as claimed in any preceding claim comprising a core obtained and/or obtainable from hexahydrophthalic anhydride.

9. A hyperbranched polyester amide as claimed in any preceding claim, which has a cloud point of at least 100°C in BRINE, wherein BRINE is the salt solution as defined in claim 1.

10. A hyperbranched polyester amide as claimed in any preceding claim comprising a core obtained and/or obtainable from at least one hexahydrophthalic anhydride, at least one cationic end group and at least one citrate counter anion, where the polyester amide has a cloud point of at least 100°C in BRINE.

11. A composition suitable for use as a flocculant comprising a hyperbranched polyester amide as claimed in any of claims 1 to 10 and a suitable diluent.

12. Use as a flocculant of a polyester amide as claimed in any of claims 1 to 10 and/or a composition as claimed in claim 11.

13. A method of flocculating a material dispersed in an aqueous medium comprising the steps of: providing an material dispersed in an aqueous medium and adding thereto a sufficient amounts of one or more polyester amide as claimed in any of claims 1 to 10 and/or a composition as claimed in claim 11 to cause the material dispersed in said medium to flocculate.

**Patentansprüche**

1. Hyperverzweigtes Polyesteramid mit einem Trübungspunkt von mindestens 50°C in vollentsalztem Wasser oder in Salzlösung, die auch als Kochsalzlösung bezeichnet wird, wobei das Polyesteramid mindestens eine Endgruppe daran umfasst, die ausgewählt ist aus:

mindestens einer neutralen Endgruppe, umfassend eine positiv geladene kationische Gruppierung, vorzugsweise ein Onium-Ion (weiter bevorzugt ein quaternäres Ammonium- oder Phosphonium-Kation), das kein kovalent an eine negativ geladene Gruppierung wie eine Carboxylatgruppe, die der kationischen Stelle nicht benachbart sein darf, gebundenes Wasserstoffatom trägt,
wobei der Trübungspunkt des Polyesteramids gemäß der Verfahrensweise bestimmt wird, dass in ein 50-ml-Glasfläschchen 140 mg des Polyesteramids eingewogen und mit Wasser bzw. Kochsalzlösung bis zu einem Gesamtgewicht von 20 g versetzt werden, wobei im Fall von aminhaltigen Polyesteramiden der pH-Wert mit 5 gew.-%iger HCl-Lösung auf 4 eingestellt wird, ein mit Teflon beschichteter Rührstab in das Fläschchen gegeben wird und ein Thermoelement ungefähr in der Mitte des Fläschchens mindestens 1 cm in die Lösung eingetaucht wird, das Fläschchen auf eine Rühr-/Heizvorrichtung gestellt wird und die Temperatur unter Rühren allmählich erhöht wird, die Lösung beim Erwärmen visuell beobachtet wird und der Trübungspunkt durch das erste Anzeichen von Trübheit der Lösung angezeigt wird,
wobei für die Bestimmung des Trübungspunkts in Kochsalzlösungen eine Salzzusammensetzung bestehend aus

140 g Natriumchlorid
30 g Calciumchlorid.$6H_2O$
8 g Magnesiumchlorid.$6H_2O$

in 1 Liter vollentsalztem Wasser gelöst verwendet wurde, wobei der pH-Wert der Lösung mit 0,1 M Salzsäurelösung auf 4 eingestellt wurde.

2. Hyperverzweigtes Polyesteramid nach Anspruch 1, das einen Trübungspunkt von mindestens 75°C aufweist und wobei die mindestens eine neutrale Endgruppe daran mindestens ein Zwitterion, dass ein an ein positiv geladenes Stickstoffatom gebundenes anionisches Carboxylat aufweist, umfasst.

3. Hyperverzweigtes Polyesteramid nach einem der vorhergehenden Ansprüche, das einen Trübungspunkt von mindestens 80°C aufweist und wobei die mindestens eine neutrale Endgruppe eine durch Formel 1 wiedergegebene Gruppe umfasst:

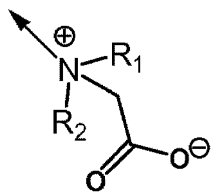,

wobei $R_1$ und $R_2$ unabhängig voneinander für gegebenenfalls substituierte $C_{1-6}$-Hydrocarbogruppen, vorzugsweise $C_{1-4}$-Hydrocarbylgruppen, stehen und weiter bevorzugt beide Methyl sind (d.h. eine "Betain"-Gruppe).

4. Hyperverzweigtes Polyesteramid nach dem vorhergehenden Anspruch, wobei in Formel 1 $R_1$ und $R_2$ unabhängig voneinander für $C_{1-4}$-Hydrocarbylgruppen stehen.

5. Hyperverzweigtes Polyesteramid nach dem vorhergehenden Anspruch, wobei in Formel 1 $R_1$ und $R_2$ unabhängig voneinander für Methyl stehen (d.h. Formel 1 ist eine "Betain"-Gruppe).

6. Hyperverzweigtes Polyesteramid nach einem der vorhergehenden Ansprüche, das kationische funktionelle Gruppen daran und ein oder mehrere aus mindestens einer organischen (ein- oder mehrwertigen) Carbonsäure (einschließlich sauren und/oder Wasserstoffsalzen davon) erhaltene(s) und/oder erhältliche(s) Carboxylat-Gegenanion(en) umfasst.

7. Hyperverzweigtes Polyesteramid nach dem vorhergehenden Anspruch, das ein oder mehrere aus Citronensäure und/oder einem geeigneten Säuresalz davon erhaltene(s) und/oder erhältliche(s) Carboxylat-Gegenanion(en) umfasst.

8. Hyperverzweigtes Polyesteramid nach einem der vorhergehenden Ansprüche, umfassend einen aus Hexahydrophthalsäureanhydrid erhaltenen und/oder erhältlichen Kern.

**9.** Hyperverzweigtes Polyesteramid nach einem der vorhergehenden Ansprüche, das einen Trübungspunkt von mindestens 100°C in KOCHSALZLÖSUNG aufweist, wobei es sich bei KOCHSALZLÖSUNG um die Salzlösung gemäß Anspruch 1 handelt.

**10.** Hyperverzweigtes Polyesteramid nach einem der vorhergehenden Ansprüche, umfassend einen aus mindestens einem Hexahydrophthalsäureanhydrid erhaltenen und/oder erhältlichen Kern, mindestens eine kationische Endgruppe und mindestens ein Citrat-Gegenanion, wobei das Polyesteramid einen Trübungspunkt von mindestens 100°C in KOCHSALZLÖSUNG aufweist.

**11.** Zur Verwendung als Flockungsmittel geeignete Zusammensetzung, umfassend ein hyperverzweigtes Polyesteramid nach einem der Ansprüche 1 bis 10 und ein geeignetes Verdünnungsmittel.

**12.** Verwendung eines Polyesteramids nach einem der Ansprüche 1 bis 10 und/oder eine Zusammensetzung nach Anspruch 11 als Flockungsmittel.

**13.** Verfahren zum Ausflocken einer in einem wässrigen Medium dispergierten Substanz, bei dem man eine in einem wässrigen Medium dispergierte Substanz bereitstellt und ausreichende Mengen eines oder mehrerer Polyesteramide nach einem der Ansprüche 1 bis 10 und/oder einer Zusammensetzung nach Anspruch 11 zugibt, um die in dem Medium dispergierte Substanz zum Ausflocken zu bringen.

## Revendications

**1.** Poly(ester-amide) hyper-ramifié ayant un point de trouble d'au moins 50 °C dans de l'eau déminéralisée ou dans de la solution de sel également appelée saumure, sur lequel poly(ester-amide) se trouve au moins un groupe terminal choisi parmi : au moins un groupe terminal neutre comprenant une fraction cationique chargée positivement de préférence un ion onium (de préférence encore un cation ammonium quaternaire ou phosphonium) qui ne porte pas d'atome d'hydrogène liée de façon covalente à une fraction chargée négativement telle qu'un groupe carboxylate qui peut ne pas être adjacente au site cationique,
le point de trouble du poly(ester-amide) étant déterminé suivant la procédure consistant à peser dans un flacon en verre de 50 ml 140 mg du poly(ester-amide) auquel de l'eau ou une solution de saumure est ajoutée jusqu'à un poids total de 20 g et dans le cas de poly(ester-amides) contenant une amine le pH étant ajusté avec de la solution d'HCl à 5 % p/p pour obtenir un pH de 4, une barre d'agitation revêtue de téflon étant ajoutée au flacon et un thermocouple étant immergé dans la solution sur au moins 1 cm, approximativement au milieu du flacon, le flacon étant placé sur un agitateur chauffant et la température étant progressivement augmentée sous agitation, la solution étant observée visuellement pendant le réchauffage et le point de trouble étant indiqué par le premier signe de trouble de la solution,
une composition de sels constituée de

140 g de chlorure de sodium
30 g de chlorure de calcium.6$H_2O$
8 g de chlorure de magnésium.6$H_2O$

dissous dans 1 litre d'eau déminéralisée ayant été utilisée pour la détermination du point de trouble dans des solutions de saumure, le pH de la solution ayant été ajusté à 4 avec de la solution d'acide chlorhydrique 0,1 M.

**2.** Poly(ester-amide) hyper-ramifié selon la revendication 1, qui a un point de trouble d'au moins 75 °C et sur lequel l'au moins un groupe terminal neutre comprend : au moins un zwitterion qui a un carboxylate anionique lié à un atome d'azote chargé positivement.

**3.** Poly(ester-amide) hyper-ramifié selon une quelconque revendication précédente, qui a un point de trouble d'au moins 80 °C et dans lequel l'au moins un groupe terminal neutre comprend un groupe représenté par la formule 1 :

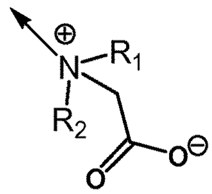

où $R_1$ et $R_2$ désignent indépendamment des groupes hydrocarbonés en $C_{1-6}$ éventuellement substitués, de préférence des groupes hydrocarbyle en $C_{1-4}$, de préférence encore sont tous des groupes méthyle (c'est-à-dire un groupe « bétaïne »).

4. Poly(ester-amide) hyper-ramifié selon la revendication précédente, dans lequel dans la formule 1 $R_1$ et $R_2$ désignent indépendamment des groupes hydrocarbyle en $C_{1-4}$.

5. Poly(ester-amide) hyper-ramifié selon la revendication précédente, dans lequel dans la formule 1 $R_1$ et $R_2$ désignent indépendamment des groupes méthyle (c'est-à-dire que la formule 1 est un groupe « bétaïne »).

6. Poly(ester-amide) hyper-ramifié selon une quelconque revendication précédente, sur lequel se trouvent des groupes fonctionnels cationiques et qui comprend un ou plusieurs contre-anions carboxylates obtenus et/ou pouvant être obtenus à partir d' au moins un acide monocarboxylique ou polycarboxylique organique (y compris les sels acides et/ou hydrogéno de ceux-ci).

7. Poly(ester-amide) hyper-ramifié selon la revendication précédente qui comprend un ou plusieurs contre-ions carboxylates obtenus et/ou pouvant être obtenus à partir d'acide citrique et/ou d'un quelconque sel d'acide approprié de celui-ci.

8. Poly(ester-amide) hyper-ramifié selon une quelconque revendication précédente comprenant un noyau obtenu et/ou pouvant être obtenu à partir d'anhydride hexahydrophtalique.

9. Poly(ester-amide) hyper-ramifié selon une quelconque revendication précédente, qui a un point de trouble d'au moins 100 °C dans de la SAUMURE, la SAUMURE étant la solution de sels telle que définie dans la revendication 1.

10. Poly(ester-amide) hyper-ramifié selon une quelconque revendication précédente comprenant un noyau obtenu et/ou pouvant être obtenu à partir d'au moins un anhydride hexahydrophtalique, d'au moins un groupe terminal cationique et d'au moins un contre-anion citrate, le poly(ester-amide) ayant un point de trouble d'au moins 100 °C dans de la SAUMURE.

11. Composition appropriée pour être utilisée comme floculant comprenant un poly(ester-amide) hyper-ramifié selon l'une quelconque des revendications 1 à 10 et un diluant approprié.

12. Utilisation d'un poly(ester-amide) selon l'une quelconque des revendications 1 à 10 et/ou d'une composition selon la revendication 11 comme floculant.

13. Procédé de floculation d'une matière dispersée dans un milieu aqueux comprenant les étapes consistant à : fournir une matière dispersée dans un milieu aqueux et y ajouter des quantités suffisantes d'un ou plusieurs poly(ester-amides) selon l'une quelconque des revendications 1 à 10 et/ou d'une composition selon la revendication 11 pour amener la matière dispersée dans ledit milieu à floculer.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6784267 B1
- CN 102030399 A
- EP 1036106 A
- EP 1306401 A
- WO 0058388 A
- WO 0056804 A
- WO 07098888 A
- WO 2000056804 A
- WO 2000058388 A
- WO 2003037959 A
- WO 2007090009 A
- WO 2007144189 A


### Non-patent literature cited in the description


- **MALCOLM A. KELLAND.** *J. App. Poly. Sci.,* 15 August 2011, 2282-2290